# EUROPEAN PATENT SPECIFICATION

(11) **EP 3 026 396 B1**
(45) Date of publication and mention of the grant of the patent: **05.12.2018**
(21) Application number: 16000344.8
(22) Date of filing: 11.02.2016
(51) Int. Cl.: G01C 22/00

(54) **COMPUTERIZED METHOD AND HARDWARE COMPONENT FOR DERIVING STEP COUNTS FROM A PRESSURE SENSOR**
COMPUTERISIERTES VERFAHREN UND HARDWAREKOMPONENTE ZUR ABLEITUNG VON SCHRITTZAHLEN AUS EINEM DRUCKSENSOR
PROCÉDÉ INFORMATISÉ ET COMPOSANT MATÉRIEL POUR DÉRIVER LE NOMBRE DE PAS D'UN CAPTEUR DE PRESSION

(43) Date of publication of application: 01.06.2016
(73) Proprietor: Sensirion AG, 8712 Stäfa (CH)
(72) Inventor: Hasenfranz, David, 8712 Stäfä (CH); Kinzer, Michel, 8712 Stäfä (CH); Koehler, Moritz, 8712 Stäfä (CH); Sacchetti, Andrea, 8712 Stäfä (CH); Pop, Tomas, 8712 Stäfä (CH)
(74) Representative: Ragot, Sébastien Pierre

(56) References cited:
- JP-A- 2011 169 697
- US-A1- 2007 213 930
- US-A1- 2015 150 491

## Description

### BACKGROUND

The invention relates in general to the field of methods and devices for deriving step counts of a person travelling on foot (pedometers). In particular, it is directed to methods and devices for deriving step counts based on pressure sensor data.

Nowadays pedometers are widely used. A pedometer is an electronic or electromechanical device, designed to count steps a user takes, based on the detected motion or moves of the user. A calibration is typically needed to convert the detected steps in an approximate distance covered by the user. Current pedometers mostly rely on mechanical sensors, e.g., motion sensors, such as MEMS inertial sensors. Electronics or computerized units are used to derive steps from data output by the sensor. Contemporary pedometers include sophisticated software (or instructions) to refine the step count and convert step counts into a distance. Pedometers are included in a number of devices, such as smartphones, smartwatches or consumer electronics. The software is typically an always-on background application.

However, such pedometers consume substantial amount of power, because they require relatively power intensive sensors that need be constantly on.

A simple solution is therefore needed, which makes it possible to derive step counts with a lower power consumption.

The document JP2011 169697 A discloses a compact vibration sensor for detecting vibrations with a microphone in a housing. The housing comprises a flexible member that deforms in response to an external force applied and returns to its original shape when this force ceases to be applied. The microphone is located in a closed space, within the housing, so as to detect a change in air pressure within this closed space. This vibration sensor can be used in a personal digital assistant, which can notably be used to detect a step count (and hence be used as a pedometer). To that aim, the device counts the number of occurrences of vibrations. If necessary, noise removal algorithms may be used.

### SUMMARY

According to a first aspect, the present invention is embodied as a computerized method for deriving step counts from a hardware component for a consumer good carried or worn by a user. The hardware component comprises an air pressure sensor (hereafter referred to as a "pressure sensor") and a detection module, wherein the detection module is configured to access data from the pressure sensor. The method comprises, at the detection module:
sampling pressure sensor data from the pressure sensor, the pressure sensor data representative of temporal pressure oscillations;
identifying, from the sampled pressure sensor data, a signal corresponding to pressure oscillations characteristics of pressure waves induced by steps taken by the user of the consumer good, while travelling on foot; and
deriving a step count from the identified signal.

In addition, the hardware component further comprises: a motion sensor, the latter configured to produce motion sensor data representative of a proper acceleration of the hardware component. Moreover, the method further comprises:
accessing a first step count as derived by said detection module from said pressure sensor data;
accessing a second step count as derived from said motion sensor data;
comparing the first step count with the second step count accessed to obtain a comparison result; and
based on the obtained comparison result, deactivating said motion sensor.

The steps performed at the detection module relies on a pressure sensor, rather than a motion sensor. Present inventors have indeed realized that, quite surprisingly, a pressure sensor can sense pressure variations caused by (air) pressure waves induced by steps taken by a pedestrian carrying or wearing a consumer good equipped with such a pressure sensor. Thus, a pedometer can be fabricated, which primarily uses pressure sensor data, instead of motion sensor data as usual in the art. Since a pressure sensor is typically much less power intensive than a motion sensor, one understands that a pressure-based pedometer may substantially reduce energy consumption.

Additional steps of the method nevertheless rely on a motion sensor. The use of the motion sensor, however, is preferably limited as much as possible and the motion sensor may be switched off whenever possible, e.g., when a pressure-based step count can adequately be derived, to reduce power consumption. The motion sensor may for instance be switched on, from times to times, for the purpose of calibrating the pressure-based pedometer.

In embodiments, the above method may further comprise one or more of the following features:
- The step of identifying comprises identifying a signal corresponding to pressure oscillations, the pressure oscillations having, on average, a peak amplitude of x Pascal, where 0.5 ≤ *x* ≤ 20.0, preferably 1.0 ≤ *x* ≤ 10.0, over a period *T,* wherein, on average, 0.2 s ≤ *T* ≤ 0.7 s;
- The step of identifying further comprises transforming pressure sensor data sampled during a given time interval w to a frequency domain representation of the sampled pressure sensor data, whereby said signal is identified as one or more peaks, preferably as a single peak, in said frequency domain representation;
- The step of identifying said signal comprises attempting to locate, in said frequency domain representation, a peak in a range of frequencies between 1.5 Hz and 4.2 Hz;
- At the step of sampling, said pressure sensor data are sampled at a sampling rate *r*, where 2.0 Hz ≤ *r* ≤ 10.0 Hz, preferably 3.0 Hz ≤ *r* ≤ 9.0 Hz, and more preferably *r* = 9 Hz;
- The method further comprises, at the detection module, and prior to sampling: accessing data as to a context of the user; and adaptively setting a sampling rate r for the subsequent sampling, according to the accessed data, wherein, at sampling, said pressure sensor data are sampled at the adaptively set sampling rate *r*;
- At the step of sampling, said pressure sensor data are sampled at a sampling rate *r*, during a time interval *w*, where 5.0 s ≤ *w* ≤ 10.0 s;
- Said hardware component is integrated in a mobile device, the method further comprises, prior to sampling pressure sensor data from the pressure sensor, placing the mobile device in a deformable receptacle, such as a pocket or a handbag, and identifying comprises identifying a signal corresponding to pressure oscillations characteristics of pressure waves induced by steps taken by the user, as occurring inside such a deformable receptacle;
- The method further comprises reactivating said motion sensor;
- The hardware component further comprises an integrated circuit component carrying the motion sensor, wherein said detection module is at least partly implemented at the integrated circuit component, so as for steps performed by the detection module to be at least partly implemented at the integrated circuit component;
- The hardware component further comprises one or more processors and a sensor hub, the latter operatively connected to the one or more processors and configured for processing data from a set of sensors of the hardware component, said set comprising said pressure sensor, and so as to off-load processing from the one or more processors, and the detection module is at least partly implemented at the sensor hub, so as for steps performed by the detection module to be at least partly implemented by the sensor hub; and
- The method further comprises, at an application and/or a service running on a mobile device in which said hardware component is integrated: accessing the derived step count or a related quantity.

According to another aspect, the invention is embodied as a hardware component for a consumer good comprising a pressure sensor and a detection module, wherein the detection module is configured for: sampling pressure sensor data from the pressure sensor, the pressure sensor data representative of temporal pressure oscillations; identifying, from the sampled pressure sensor data, a signal corresponding to pressure oscillations characteristics of pressure waves induced by steps taken by a user carrying or wearing the consumer good, while travelling on foot; and deriving a step count from the identified signal. In addition, the hardware component further comprises a motion sensor, the latter configured to produce motion sensor data representative of a proper acceleration of the hardware component. The hardware component is otherwise configured for: accessing a first step count as derived by said detection module from said pressure sensor data; accessing a second step count as derived from said motion sensor data; comparing the first step count with the second step count accessed to obtain a comparison result; and based on the obtained comparison result, deactivating said motion sensor, consistently with the present methods.

In embodiments, the hardware component is integrated in a computerized device and further comprises a processing device, said processing device comprising: an integrated circuit component having the motion sensor mounted thereon; and/or a sensor hub configured for processing data from a set of sensors of the computerized device, said set including said pressure sensor, and wherein, said detection module is at least partly implemented at said processing device.

The invention can further be embodied as a consumer good comprising a hardware component according to embodiments, wherein the pressure sensor is arranged in the hardware component and the latter is configured in the consumer good, so as for a pressure sensitive area of the sensor to be exposed to air in a cavity of the consumer good, wherein the consumer good further comprises an opening, on a given surface of the consumer good, which opening leads to the cavity, and wherein said given surface is a side meant to face a surface, whose distance to the opening fluctuates, in operation, owing to steps taken by a user of the consumer good while travelling on foot.

According to a final aspect, the invention is embodied as a computer program product for deriving step counts from a hardware component for a consumer good, the latter comprising a pressure sensor, a detection module and a motion sensor, the detection module configured to access data from the pressure sensor, the motion sensor configured to produce motion sensor data representative of a proper acceleration of the hardware component. The computer program product comprises a computer readable storage medium having program instructions embodied therewith, the program instructions being executable by one or more processors to cause to implement steps of a method according to embodiments as evoked above.

Devices, apparatuses, computerized methods and computer program products embodying the present invention will now be described, by way of non-limiting examples, and in reference to the accompanying drawings.

### BRIEF DESCRIPTION OF SEVERAL VIEWS OF THE DRAWINGS

FIGS. 1A and 1B are 3D views of a smartphone, comprising a pressure sensor and a detection module for deriving step counts, as involved in embodiments;
FIG. 2A shows a smartwatch equipped with a similar pressure sensor and detection module as the smartphone of FIG. 1, as involved in embodiments;
FIG. 2B schematically illustrates a device equipped with a pressure sensor and a detection module, as in FIGS. 1 and 2A, where the device is placed in a deformable bag, as in embodiments;
FIG. 3 is a 2D cross-sectional view depicting a pressure sensor, lodged in a cavity of a mobile device such as depicted in FIG. 1 or 2, as in embodiments;
FIGS. 4 and 5 show plots of typical pressure variations (FIG. 4: in the time domain; FIG. 5: in the frequency domain), as sensed by a pressure sensor in a device placed in a pocket of a user travelling on foot. Such variations may be used to derive step counts, as in embodiments. The two curves plotted in each of FIG. 4 and FIG. 5 correspond to different paces (fast and slow walking);
FIGS. 6 and 7 show similar plots as FIGS. 4 and 5, although the device is now in the open (carried in hand, normal walking);
FIG. 8 shows plots obtained from a first experiment, conducted with a pressure sensor in a device placed in a pocket of a pedestrian walking indoor, through different floor levels, during a time period of 4 minutes. FIG. 8A shows pressure oscillations obtained in the time domain; FIG. 8B depicts temporal variations of the corresponding peak frequencies and FIG. 8C compares the results obtained with results obtained with a standard pedometer (using a motion sensor);
FIG. 9 shows similar plots as in FIG. 8, obtained from a second experiment, where the device is placed in a pocket of a user walking both indoor and outdoor, and notably using public transportation, during a total time period of 50 minutes;
FIG. 10 compares pressure variations obtained (in the frequency domain) from a pressure sensor of a device placed either in a front pocket or in a back pocket of a pedestrian walking apace;
FIG. 11 is a flowchart illustrating high-level steps of a method for deriving step counts from a pressure sensor, as involved in embodiments; and
FIG. 12 is a block diagram schematically illustrating selected components and modules of a device, configured to derive step counts, according to embodiments.

The accompanying drawings show simplified representations of computerized devices (or parts thereof) and methods as involved in embodiments. Technical features depicted in the drawings are not necessarily to scale. Similar or functionally similar elements in the figures have been allocated the same numeral references, unless otherwise indicated.

### DETAILED DESCRIPTION OF EMBODIMENTS OF THE INVENTION

The following description is structured as follows. First, general embodiments and high-level variants are described (sect. 1). The next section addresses more specific embodiments and technical implementation details (sect. 2).

### 1. General embodiments and high-level variants

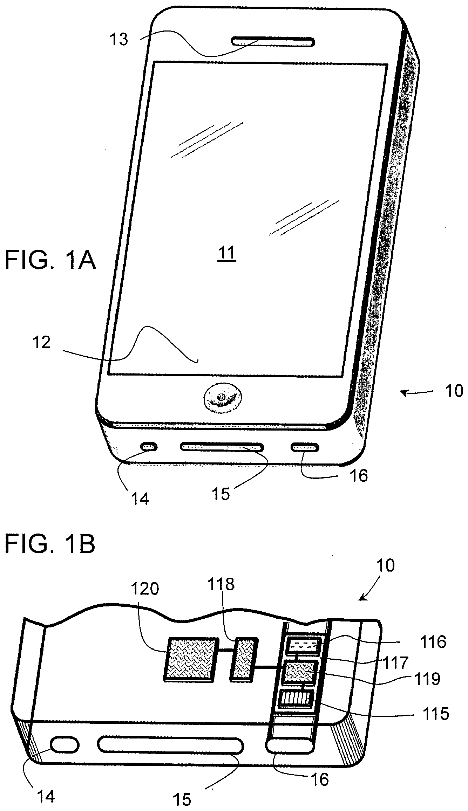

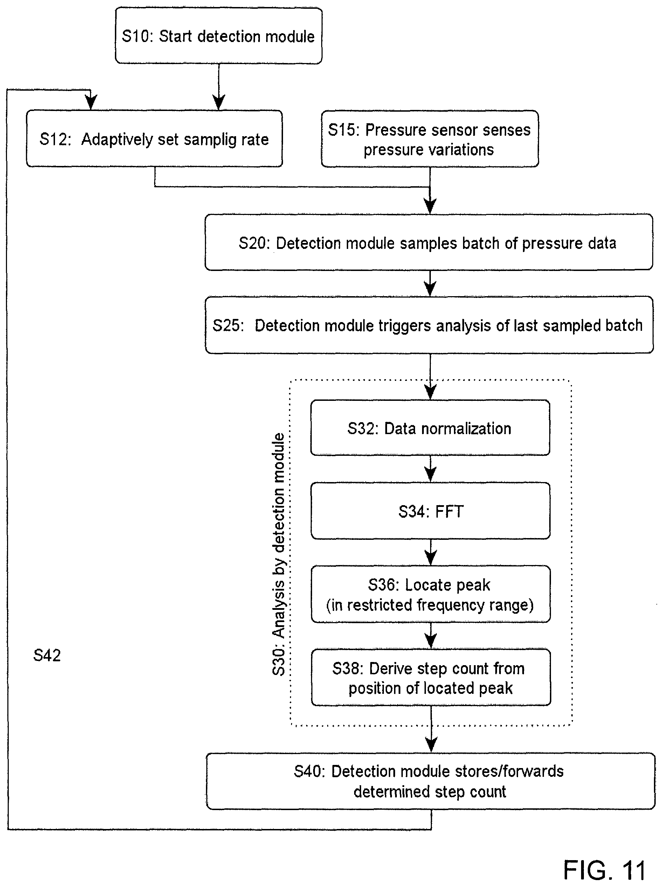

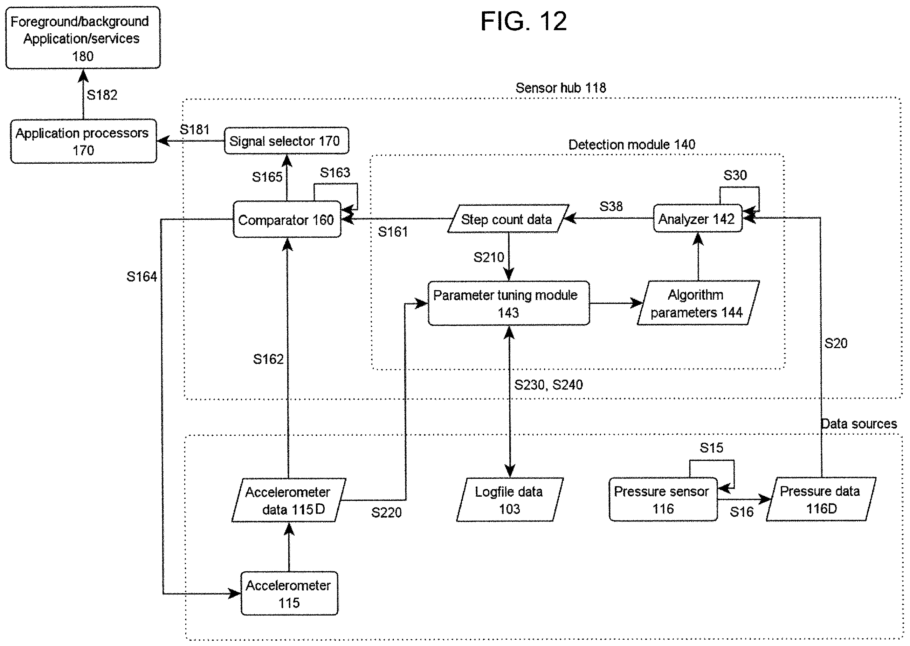

Referring generally to FIGS. 1 - 12, with emphasis put on FIGS. 11 and 12, an aspect of the invention is first described, which involves a computerized method for deriving step counts from an air pressure sensor (or pressure sensor, for short).

This method relies on a detection module 140, which is operatively connected to a pressure sensor 116. The detection module 140 and the pressure sensor 116 form part of a hardware component 115 - 120 for a consumer good 4, 10. The detection module 140 is generally configured to access data 116D from the pressure sensor 116.

The method uses the following basic steps. To start with, the detection module 140 samples pressure sensor data it accesses (or receives) from the pressure sensor 116, step S20, FIGS. 11 and 12. The pressure sensor data are representative of temporal pressure oscillations and are typically output as a time-varying signal by the pressure sensor. The pressure sensor data 116D may for instance be provided directly to the detection module, e.g., as an electrical signal and need not necessarily be stored on memory before being sampled. An analog-to-digital converter is typically present (either part of the sensor itself, of the detection module or in-between), to enable a conversion to digital numbers that represent the time-varying pressure amplitude. Other components may be present.

Next, the detection module 140 attempts to identify S30, from the sampled pressure sensor data, a signal corresponding to specific pressure oscillations. Namely, the detection module 140 attempts to locate pressure variations (or a signal representative thereof) that are characteristics of pressure waves induced by steps taken by a pedestrian 3, who carries or wears the consumer good 10, while travelling on foot. Such oscillations are described later in detail.

The detection module 140 may finally derive S38 a step count from the identified signal, as the step count happens to be easily related thereto.

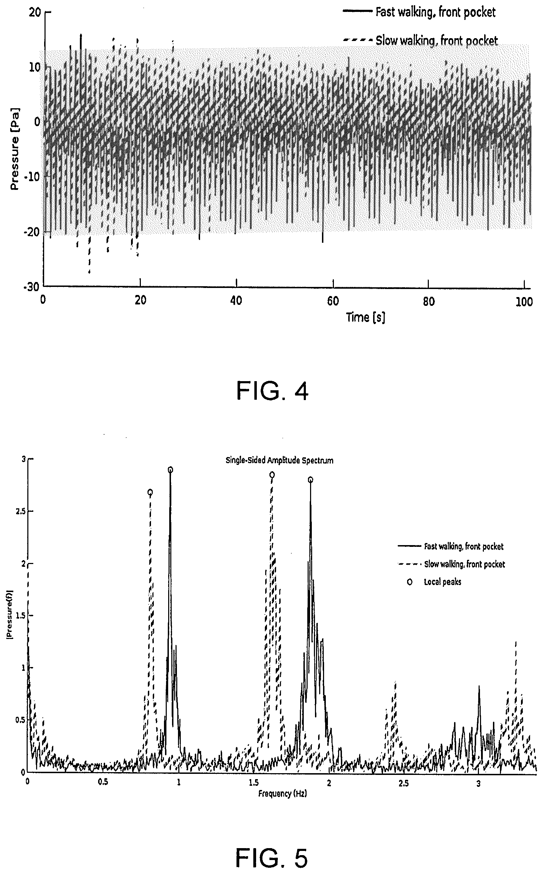

The present solution primarily relies on a pressure sensor, rather than a motion sensor. Present inventors have indeed realized that, quite surprisingly, a pressure sensor can sense pressure variations caused by air pressure waves as induced by steps taken by a pedestrian who carries a device equipped with such a pressure sensor. Remarkably, such pressure waves can be sensed irrespective of the actual height (altitude) difference attained while walking. I.e., such pressure waves are sensed even on a flat course (as shown in FIGS. 4 - 7). Thus, and as they further realized, a pedometer can be fabricated, which primarily relies on pressure sensor data, instead of motion sensor (accelerometer) data as usually done in the art. Since a pressure sensor is typically much less power intensive (typically ∼10µA) than a motion sensor (typically ∼1 to 10mA), one understands that a pressure-based pedometer may drastically reduce energy consumption with respect to pedometer solely based on an accelerometer.

The pressure waves induced by a pedestrian, while moving, are better sensed when the device is placed in a deformable soft receptacle such as a pocket or a bag, or against a deformable surface, as discussed in detail below. This way, even pressure waves generated by small movements can then be sensed by the pressure sensor.

The sampling is performed at a given sampling rate *r*, which typically is chosen such that 2.0 ≤ *r* ≤ 10.0 (in Hertz), and which is possibly adaptively set, as discussed later in detail. Yet, the sampling may possible be imposed, by default, by the detection module and/or the pressure sensor, owing to a maximal time resolution afforded or imposed by them. This, however, is unlikely in practice as typical pressure sensors and processing elements allow far better time resolution than what is needed here, whence the advantage of sampling the data. In all cases, the sampling or the maximal resolution allowed by the detection module must be so as to sufficiently capture the desired, typical pressure-induced oscillations.

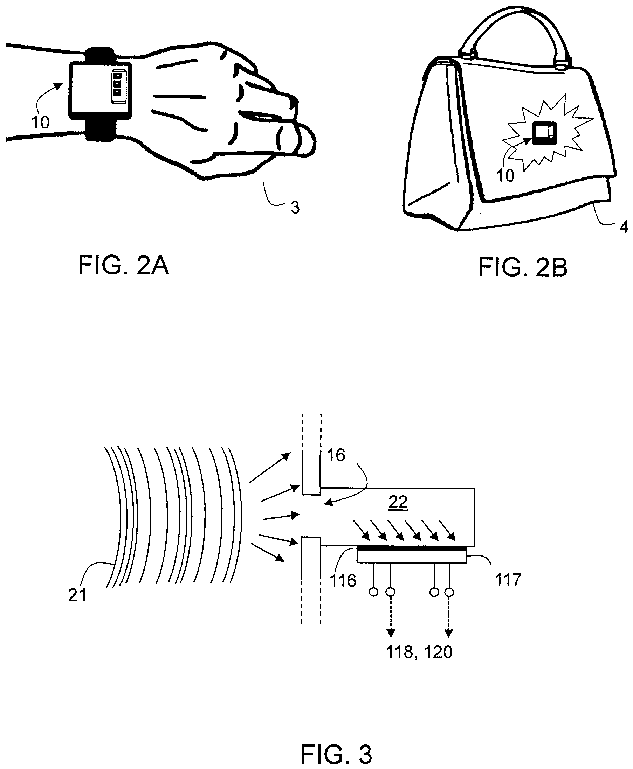

The hardware component 115 - 120 is suitable for integration in a consumer durable good 10. The consumer good 10 is preferably a mobile device, as mostly assumed in embodiments described below. It can notably be a handheld device (such as a smartphone or a portable digital assistant, FIG. 1) or a wearable smart device, such as smartwatch (FIG. 2). The mobile device may also be a pocket device (e.g., an information appliance). It is typically small enough to be easily carried by a user. Still, the above hardware components and detection methods may be used in a laptop. An exemplary mobile device and a possible arrangement of the pressure sensor and other components therein are discussed in more details in Sect. 2.

More generally, this consumer good 10 may also be a necklace, a collar e.g., a dog collar. It may also be embodied as a shoe or a pair of shoes, a garment, an article of clothing, glasses or, still a handbag equipped with a pressure sensor (the latter preferably arranged so as to sense pressure waves from inside the handbag), etc.

The detection module 140 is typically implemented as an electronic circuit, e.g., a chip 119 or any processing device 118, 119, 120, configured for performing operations as described above. The module 140 is operatively connected (directly or not) to the pressure sensor 116. The hardware component may comprise several modules and components. Beyond the pressure sensor 116 and the detection module 140, the hardware component may notably comprise a printed circuit board 117 (or PCB, FIGS. 1B, 3), onto which the pressure sensor 116 is mounted (FIG. 3). Additional components may be mounted onto that same PCB, such as a motion sensor 115 or an electronic circuit 119. Moreover, the consumer good 10 may comprise other processing devices 118, 120, if necessary connected to said electronic circuit 119. The hardware component may further include other components that will form at least a part of, e.g., a mobile device 10.

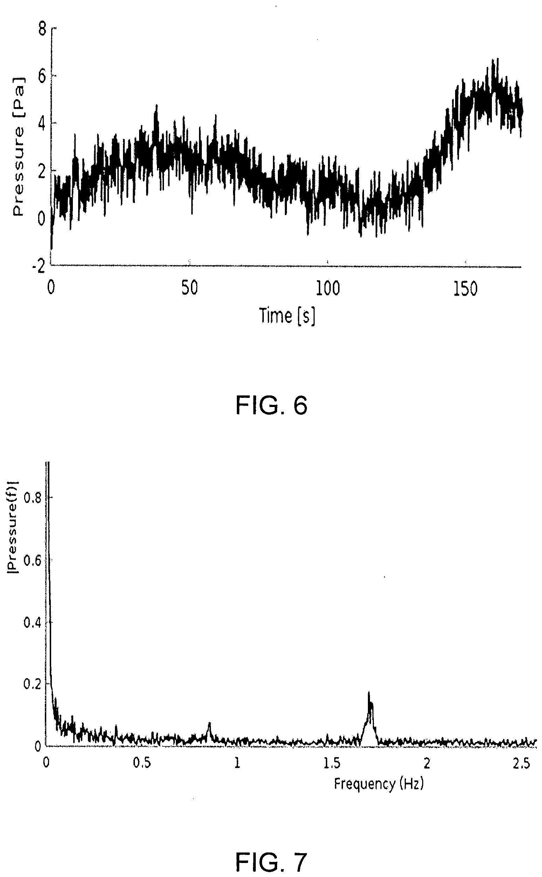

As evoked above, the detection module 140 attempts to locate specific pressure variations (i.e., a signal characteristic of pressure waves induced by steps of a pedestrian. Such pressure waves are now discussed in reference to FIGS. 4 and 6. As it can be realized, these pressure waves lead to measured oscillations that have a peak amplitude of *x* Pascal, where, typically, 0.5 ≤ *x* ≤ 20.0, on average. The period *T* of such oscillations is, on average, between 0.2 and 0.7 seconds (0.2 s ≤ *T* ≤ 0.7 s), as can be concluded from FIG. 4 or 6. The interval for the peak amplitude can be reduced, in certain circumstances (1.0 ≤ *x* ≤ 10.0, on average). In fact, most oscillations of interest here (i.e., a large majority thereof) happen to have a peak amplitude of *x* ≤ 20.0, or, even, *x* ≤ 10.0. A peak amplitude of *x* Pascal means that maxima of the oscillations are of ± *x* Pascal (on average), which corresponds to a peak-to-peak amplitude of 2x. The average peak amplitude depends of course on a number of factor, e.g., the exact physical context of the pedestrian, the sensor resolution, the sensor accuracy, the sensor position and arrangement, etc., such that the values above may vary. Still, the sampling resolution need be carefully chosen, so as to make it possible for the detection module to identify a signal corresponding to the above pressure oscillation characteristics. Preferred sampling rates r are discussed below.

Referring now to FIGS. 5, 7 and 11: the signal identification procedure carried out at step S30 is preferably done in the frequency domain. To that aim, the pressure sensor data are sampled during a given time interval *w* and then transformed to a frequency domain representation. Typically, the time interval *w* is chosen such that 5.0 s ≤ *w* ≤ 10.0 s, for reasons that will become apparent later. The signal of interest may then be identified (step S36, FIG. 11) as one or more peaks in this frequency domain representation, see FIG. 5 or 7. The actual algorithm may seek to identify several peaks (including harmonics of a main peak). It is, however, sufficient to try and identify a single peak in a given interval, as discussed below.

In variants, several other algorithms may be used. In particular, a time domain peak detection may be contemplated (e.g., time domain zero crossing detection, time domain zone detection, etc.). However, experiments conducted by the Inventors have shown that best results are obtained by using frequency domain peak detection. The latter turns out to be especially robust against external effects that may influence the pressure signal (e.g., ventilation system, events such as opening/closing a door, etc.). It is furthermore robust against measurement errors, e.g., calibration error and sensor drift.

When working in the frequency domain, an approach based on fast Fourier transform (or FFT) is preferred, because of its simplicity; FFT can be efficiently implemented in software or hardware (by way of digital signal processors, or DSPs, or other, dedicated hardware accelerators, etc.), as known *per se.* Analyzing data in the frequency domain requires to compute the FFT of batches of samples, i.e., samples obtained over a time window w (for each batch). The computational complexity of the FFT is known to vary as *O(n.*log *n*)*,* where *n* denotes the number of samples acquired during the time interval *w.* For fixed *n*, the complexity varies as *O*(1).

Other approaches may be contemplated as well, e.g., to compute a discrete Fourier transform (DFT) of a time sequence or, even, based on wavelet transforms.

Owing to the typical pressure oscillations sought here, the detection module 140 shall preferably seek to locate, at step S36, a peak in a range of frequencies between 1.5 Hz and 4.2 Hz, as the most prominent (and thus easily identifiable) peaks will systematically be located in that range. Attempting to locate a single peak will typically be sufficient to detect the desired signal. Yet, locating two or more peaks may (though more power intensive) be useful to refine the average value of the oscillation periods, should more precision be improved.

At present, more shall be said about preferred sampling rates. In embodiments, the pressure sensor data 116D are sampled (step S20, FIG. 11) at a sampling rate r, where 2.0 Hz ≤ *r* ≤ 10.0 Hz, so as to capture characteristic oscillations of the pressure sensor data, as evoked earlier in reference to FIGS. 4 - 7. Preferably, the sampling rate is chosen in the range 3.0 Hz ≤ *r ≤* 9.0 Hz, which turns out to be sufficient in most cases tested by the Inventors. Interestingly, a pressure-based pedometer as disclosed herein requires sampling rates that are substantially lower than those needed by accelerometer-based pedometers. For this other reason, a pressure-based pedometer is expected to have a lower power consumption.

For instance, a walking speed of 3 - 7 km/h typically involves 90 - 130 steps/minute, that is, 1.5 - 2.2 steps/second, while a running speed of 10 - 30 km/h typically amounts to 150 - 250 steps/minute i.e., 2.5 - 4.2 steps/second, as known *per se.* Noting that one step (as counted above) corresponds to a full pressure oscillation (over a full period *T*) and keeping in mind the Nyquist sampling theorem (whereby the sampling frequency should be at least twice the highest frequency of interest), adequate sampling rates would be in the range 3.0 Hz ≤ *r* ≤ 8.4 Hz. Thus, in practice, using a constant sampling rate of, e.g., 9 Hz, is adequate as it allows frequencies arising from both walking and running to be detected. Tests have confirmed that sufficient sampling rates are of 4.4 Hz (for walking) and of 8.4 Hz (for running). However, one may choose 2.0 Hz ≤ *r* ≤ 10.0 Hz to be on the safe side.

Advantageously though, the sampling frequency may adaptively set by the detection module. Namely, the sampling frequency may adaptively be chosen, e.g., based on the monitored signals S36 or, equivalently, the derived step count S38.

This is illustrated in FIG. 11: prior to sampling S20, the detection module 140 may access S42 data pertaining to the current context of the user and, then, adaptively set S12 the sampling rate *r* for the subsequent sampling steps S20, according to the accessed data. Step S12 may use simple extrapolation techniques (e.g., linear extrapolation) or, in more advanced variants, it may rely on pre-programmed patterns or, even, machine learning techniques. The extrapolation technique chosen depends on the available processing power. Best, however, is to seek to minimize power consumption, consistently with the present approach, and so to rely on simple techniques.

The data accessed at step S42 may come from the pressure sensor, the module 140 itself and/or a memory where data produced by the module 140 are logged (call it local data). Such data may for instance relate to the currently monitored peak frequency (as obtained at step S36) or step count (step S38), and/or the current sampling rate, etc. For instance, the module 140 may log the peak frequencies detected at step S36 (or an average frequency as obtained for every *m* batches of *n* samples), or the last sampling rates used and, based on the last values logged, extrapolate the next value needed, subject to a safety margin.

The context data may for instance be obtained thanks to a parallel algorithm running on the same detection module 140 (or a similar module), e.g., an algorithm monitoring pressure sensor data to detect car parking-related events (as detected from pressure variations occurring inside a vehicle when opening or closing a door of this vehicle, e.g., using the same hardware component 115 - 120 or device 10). For example, if a parallel algorithm detects that the user's vehicle has parked, then a pedometer mode may automatically be activated on the device 10 and a first sampling rate be tentatively set to, e.g., 5 Hz, as one expects the user to walk immediately after having parked his vehicle. Conversely, if it is detected that the user's vehicle has started, then the pedometer function may be switched off, e.g., subject to confirmation by the user.

In variants, or in addition to local data, data accessed at step S42 may otherwise come from or be merged with data arising from other sources, such as a motion sensor (intermittently switched on) or another detection module, etc.

In embodiments, the time intervals *w* (also called time window, or time window size), during which pressure sensor data are sampled S20 at said sampling rate *r,* are preferably chosen to be between 5.0 and 10.0 seconds, as indicated earlier (5.0 s ≤ *w* ≤ 10.0 s). As it can be realized, there is a trade-off between the time resolution and the frequency resolution: for a window size *w,* the bin size resolution in the frequency domain is 1/*w*. Thus the time interval need typically be larger than 5 seconds (e.g., between 5 and 10 s, to achieve a FFT resolution of 0.1 - 0.2 Hz, as typically needed here). The above interval (5.0 s ≤ *w* ≤ 10.0 s) turned out to be satisfactory in all the practical cases investigated by the Inventors. For example: for a FFT resolution of 0.1 - 0.2 Hz, one needs a sampling time *w* = 5 - 10s, which corresponds to *n* = 45 - 90 samples when sampling at 9 Hz.

If necessary, the time window is adaptively set as well, e.g., with respect to the resolution needed, which may notably depend on the sampling rate.

Referring now to FIGS. 4 - 5 vs. FIGS. 6 - 7, as well as to FIG. 11: present Inventors have further realized that, quite surprisingly, the present detection approach is substantially improved when the device that includes the pressure sensor is placed in a deformable receptacle 4, such as a pocket or a handbag, which is (at least partly) closed, by definition. Accordingly, in embodiments, the mobile device 10 is placed in such a deformable receptacle 4 prior to perform cycles of steps S20 - S30 (or possibly S10 - S30 or S12 - S30). This, in practice, does not impact the peak frequency (which is instead determined by the pace of the pedestrian). However, and as evoked earlier, pressure waves induced by the user steps are more pronounced in that case. Indeed, the deformations of the (soft) receptacle (i.e., the local compressions and decompressions of the volume) induced by steps cause to amplify the intensity of the pressure waves. Quantitatively, the amplitude of the oscillations in the time domain may typically gain an order of magnitude or more (compare oscillation maxima on FIG. 4 and FIG. 6), which impacts peak intensities in the frequency domain too (compare peak maxima on FIG. 5 and FIG. 7). Thus, the signal is more easily tracked when the device 10 is placed in a deformable receptacle. For that reason, the hardware component 115 - 120, or a device 10 comprising it, may advantageously be integrated in a cloth or a bag (e.g., a handbag or waist bag).

Note that, although the present approach is primarily based on pressure sensor data, hardware components as contemplated herein nevertheless include a motion sensor and, if necessary, make (sporadic) use of motion sensor data 115D obtained therefrom. Accordingly, the present hardware components comprise a motion sensor 115, e.g., an accelerometer such as a MEMS, in addition to the pressure sensor 116. The motion sensor is connected to a module, e.g., a module 160 (possibly distinct from module 140, as assumed in FIG. 12), so as for the latter to access motion sensor data 115D (step S162, FIG. 12), which are representative of a proper acceleration of the hardware component, to derive a concurrent step count. As illustrated in FIG. 12, a first step count may be derived (steps S30, S38) from the pressure sensor data, as described above in reference to FIG. 11, and passed S161 to the comparator 160, while a second step count is concurrently derived from motion sensor data obtained from the motion sensor, by the comparator 160. The comparator 160 can then compare 163 the two step counts. Finally, and based on the obtained comparison result, the comparator may deactivate (or, on the contrary, activate) S164 the motion sensor 115.

The use of the motion sensor, however, is preferably limited as much as possible and the motion sensor may be switched off whenever possible, e.g., when a pressure-based step count can adequately be derived, to reduce power consumption. The motion sensor may for instance be switched on, from times to times, for the purpose of calibrating the pressure-based pedometer. In variants, or in addition to calibration, the motion sensor may be activated if the pressure-derived signal appears to be too weak, inadequate, or erroneous, etc. Thus, the above operations 161 - 164 basically aim at switching off (or on) the motion sensor, based on a comparison with step count data derived from pressure sensor data. Yet, in more complex scenarios, step counts produced by the motion sensor and the pressure sensor may be fused, if necessary.

The above operations 161 - 164 are preferably performed at a logic unit 160 that is distinct from the detection module 140. In all cases, the module 160 is appropriately connected and configured, in the hardware component, so as to be able to access step counts derived from each of the pressure sensor and the motion sensor.

Referring now to FIGS. 1B and 12 (see also FIG. 3), a hardware component according to embodiments, may comprise an integrated circuit (IC) component 117, 119 that carries the motion sensor 115. The detection module 140 may advantageously be (at least partly) implemented at the IC component 117, 119. I.e., steps performed by the detection module 140 are (at least partly) implemented at this IC component 117, 119.

For example, and as illustrated in FIG. 1B, the motion sensor 115 may be mounted onto the PCB 117, which otherwise carries the chip 119 and, preferably, the pressure sensor 116 too, for better integration. Although the chip 119 may primarily be intended for processing motion sensor data, operations S20 - S30 may at least partly be implemented on the chip 119, to leverage processing capability thereof.

In the example of FIG. 1B, the PCB 117 carries each of: the motion sensor 115, the pressure sensor 116 and the chip 119. The chip 119 is furthermore operatively connected to one or more processors 120 and/or a sensor hub 118 of the mobile device 10, so as to off-load processing from the processors 120 and/or the sensor hub 118.

In variants (not shown), the detection module may be at least partly be implemented on a chip primarily dedicated to the sole pressure sensor, so as for this chip to perform part or all of steps S20 - S30 and, if necessary steps 161 -164.

In other variants, a sensor hub 118 is operatively connected to one or more processors 120 and configured for processing data from a set of sensors (including, e.g., the motion sensor 115 and the pressure sensor 116) of the hardware component. In that case, the detection module 140 may advantageously be implemented (partly or entirely) at the sensor hub 118 (as assumed in FIG. 12), to leverage processing capabilities thereof and off-load processing from other processors, such as processor 120 in FIG. 1B or processor 170 in FIG. 12, to save energy.

For completeness, and as illustrated in FIG. 12, the device 10 may further comprise application processors 170 (which may for instance coincide with the processors 120 of FIG. 1B), for running applications and/or services 180. Such applications and/or services 180 may access S181 - S182 step counts, or related quantities, e.g., via a signal selector 170 arranged downstream the comparator 160 and configured so as to select a step count derived from the pressure sensor or the motion sensor (or to merge and average the two step counts). The signal selector 170 delivers step counts as required by the applications/services of the device 10.

According to another aspect, the invention can be embodied as a hardware component 115 - 120 for a consumer good 4, 10. This hardware component is now described in reference to FIGS. 1 - 3 and 12. The hardware component notably comprises a pressure sensor 116 and a detection module 140, the latter operatively connected to the sensor 116 and configured so as to be able to carry out steps S20 - S30, as described earlier in reference to FIG. 11.

The hardware component 115 - 119 is preferably integrated in a computerized device 10, and may notably comprise one or more processing devices 118 - 120. The detection module 140 is at least partly implemented in one or more of said devices 118 - 120. E.g., the module 140 may be entirely implemented by one of said processing devices 118, 119, 120. In variants, its function may be distributed throughout the processing devices 118 - 120. Where to implement the functions S20 - S30 of the module 140 depends on the hardware architecture. Different layouts are possible, e.g., a distributed architecture (the sensors 115 and 116 are mounted on distinct IC components) or an integrated architecture (the sensors 115 and 116 are mounted on the same IC component, as assumed in FIG. 1B).

In that respect, and as further described earlier in reference to FIGS. 1B and 3, the processing devices 118 - 120 may notably comprise an IC component 117, 119, i.e., a PCB 117 with a chip 119 and a motion sensor 115 mounted thereon. The motion sensor 115 is thus, preferably, operatively connected to the chip 119, for the latter to process data from the motion sensor 115. The pressure sensor is preferably mounted onto the same PCB 117 and operatively connected to the chip 119. Functions S20 - S30 of the module 140 may thus be partly (or entirely) implemented by the chip 119.

Said processing devices 118 - 120 may further comprises a sensor hub 118 configured for processing data from a set of sensors (e.g., including the pressure sensor 116 and the motion sensor 115). Functions S20 - S30 of the module 140 may accordingly be partly (or entirely) implemented by the sensor hub 118.

In variant, the functions S20 - S30 of the module 140 may partly (or entirely) be implemented at an external processor 120 that is not mounted onto the same PCB 117, and which may nevertheless form part of the hardware component, in embodiments.

Having observed that detection is substantially improved when the pressure sensor is placed in a deformable receptacle or medium, present Inventors devised a further improvement to a consumer good as contemplated herein. Namely, a consumer good 4, 10 comprising the above hardware component will typically be designed so as for a pressure sensitive area of the sensor 116 to be exposed to air 22 in a cavity of the consumer good (see, e.g., FIGS. 1A, 1B and 3), which cavity leads to an opening on a given, external surface of the consumer good. Now, said given surface may be chosen so as to face, e.g., a portion of the body of the user, in operation, in order to leverage an effect similar to the pocket use-case. The deformable medium in this case is the human body. For instance, the sensor may be placed on the back of a watch, so as to face the user's wrist, in operation.

More generally, said external surface of the consumer good may be chosen so as to face a surface, whose distance to the opening will fluctuate, in operation, owing to steps taken by the user while travelling on foot. For instance, this external surface may be an inner surface in a bag, as noted earlier, or the inward surface of a collar, so as to exploit the deformable space between the collar and the user's skin.

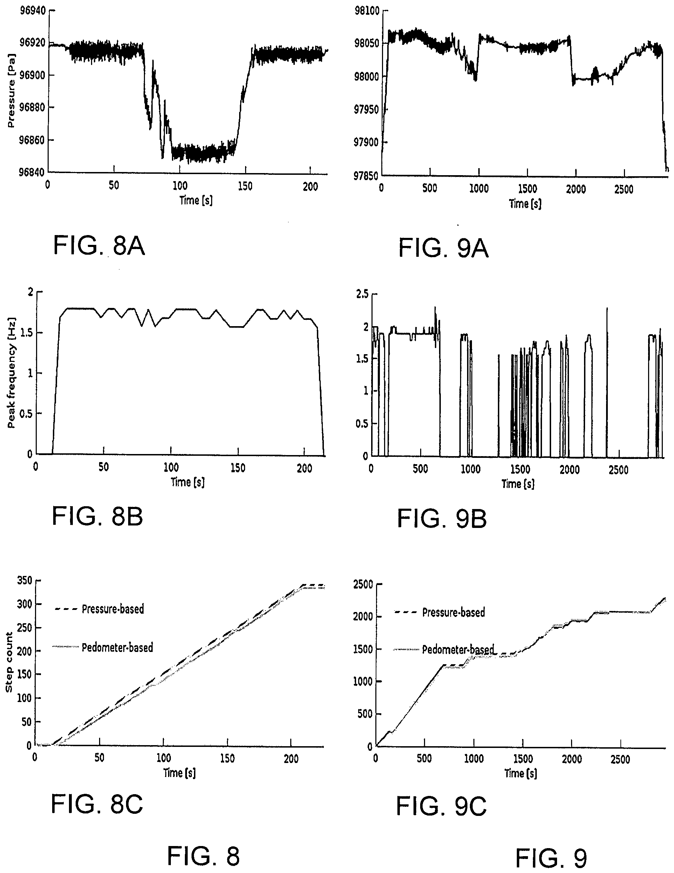

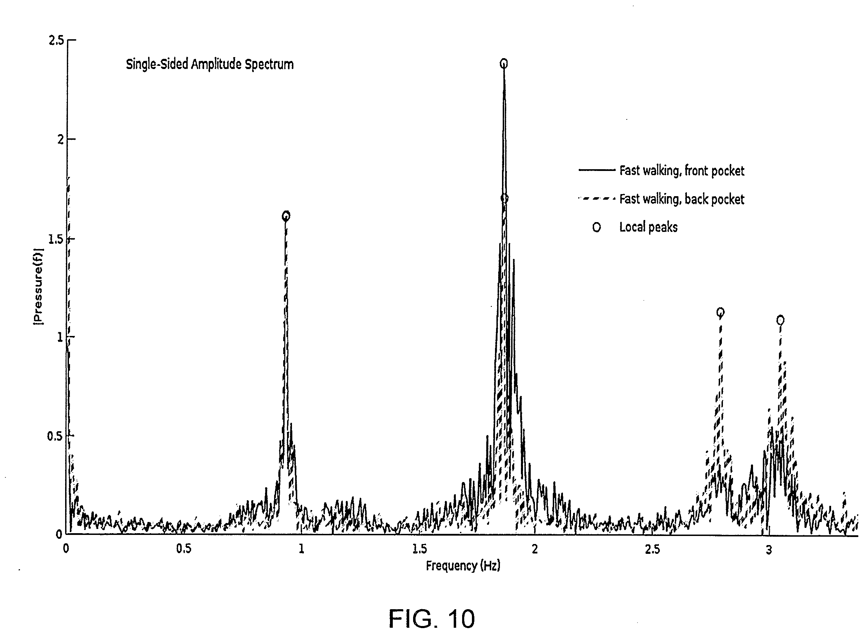

Devices and methods disclosed herein have been extensively tested. Experiments have been performed, such as reported in FIGS. 8 - 10. As one concludes from such experiments, the present approach appears to work satisfactorily, be the pedestrian indoor (FIG. 8) or outdoor (FIG. 9). Best results are obtained when the device is placed in a pocket (in any pocket, FIG. 10) of the pedestrian, in a bag, or, more generally, opposite to a deformable surface or wall, as noted above. It also works irrespective of the altitude attained, e.g., through different floor levels, and in various contexts (also in public transportations, FIG. 9). The resulting step counts compare well with results obtained from classic (motion sensor-based) pedometers, i.e., relative differences observed are typically less than 2% (FIGS. 8C, 9C), whereas the accuracy of pedometers is in general on the order of 10%.

Next, according to a final aspect, the invention can also be embodied as a computer program product for deriving step counts from a hardware component as described above. This computer program product comprises a computer readable storage medium having program instructions embodied therewith, which instructions are executable by the detection module 140 to cause the latter to perform steps as described earlier in reference to FIG. 11. Aspects related to computer program product implementations are further discussed in sect. 2.

The above embodiments have been succinctly described in reference to the accompanying drawings and may accommodate a number of variants. Several combinations of the above features may be contemplated. Examples are given in the next section.

### 2. Specific embodiments/Technical implementation details

### 2.1 Pressure sensor

A hardware device according to embodiments may be integrated in consumer goods such as fabric, a handbag 4 (FIG. 2B) or a mobile device 10 (FIG. 1A - B). In the following, the hardware component is assumed to be integrated in a mobile device 10. The latter can notably be a smart companion device such as a mobile phone (as in FIG. 1) or a smartwatch (FIG. 2A).

The device of FIG. 1A is assumed to be a mobile phone in the following. The housing of the mobile phone includes a front side with a screen 11 and other interface elements like buttons 12 for the user to interact with the phone 10. Also shown on the front side is an opening 13 for a loud-speaker. Further openings 14, 15 are located at a lower sidewall of the housing. It is known to mount components like microphones and loudspeakers behind such openings. Another opening 16 is located at the lower sidewall. As shown in FIG. 1B the opening 16 leads to a tubular duct passing through the interior of the housing.

As better seen in FIG. 3, the pressure sensor 116 is preferably mounted along the duct such that a sensitive area of the sensor is exposed to air 22 in a cavity formed inside the duct, which communicates with air outside the opening 16, so as for the pressure sensor to sense pressure variations (temporal oscillations) 21 occurring outside the opening 16 (notably caused by steps the user takes) and propagating inside the duct. The actual size and shape of the duct may depend on the volume available therefor in the mobile device and the nature of the sensor 116. However, given the physical constraints of portable mobile devices, the diameter of the opening is typically less than 1 or 2mm.

The pressure sensor 116 may be embodied as any suitable pressure sensor, e.g., a capacitive, diaphragm-based pressure sensor, a piezoelectric pressure sensor or a sensor using a piezoresistive strain gauge. Preferred pressure sensors are for instance described in patent applications EP2871455 and EP2871456.

In general, low power and ultra-low power sensors are preferred. More generally, any pressure sensor may convene, it being noted that a typical pressure sensor typically consumes between 100 and 1000 times less power than a typical accelerometer.

As the dimensions of the opening and the inner volume of the duct may lessen pressure variations at the level of the sensor 116, the detection module 140 may be equipped with algorithms that compensate for this effect.

### 2.2 Computerized mobile devices and computer program products

Computerized devices can be suitably designed for implementing embodiments of the present invention as described herein. In that respect, it can be appreciated that the methods described herein are essentially non-interactive, i.e., automated. The methods described herein can be implemented as a combination of software (or, more generally, programmable instructions) and hardware, or solely in hardware. In exemplary embodiments, the methods described herein use software or, more generally, and executable program or programmable instructions that are executed by suitable digital processing devices.

For instance, a typical mobile device 10 may include a processor 120 (FIG. 1B) and a memory coupled to a memory controller. The processor 120 is a hardware device for executing software, as, e.g., loaded in a main memory of the device. The processor 120 can be any custom made or commercially available processor. The chip 119 and the sensor hub may also be configured to execute computerized instructions, as noted in sect. 1.

The memory typically includes a combination of volatile memory elements (e.g., random access memory) and nonvolatile memory elements, e.g., solid-state memory. The software in memory may include one or more separate programs, each of which comprises executable instructions for implementing logical functions. The software in the memory includes methods described herein in accordance with exemplary embodiments and, if necessary, a suitable operating system (OS). The OS essentially controls the execution of other computer (application) programs and provides scheduling, input-output control, file and data management, memory management, and communication control and related services. It may further control the distribution of tasks to be performed by units 118, 119 and 120.

The methods described herein may typically use executable programs, scripts, or, more generally, any form of executable instructions.

When the device 10 is in operation, one or more of the processing elements 118, 119, 120 are configured to execute software stored within the memory of the mobile device 10 (possibly separate memory elements can be dedicated to each processing element 118, 119, 120), to communicate data to and from the memory, and to generally control operations pursuant to software instructions. The methods described herein and the OS, are read by one or more of the processing elements, typically buffered therein, and then executed.

Moreover, the present hardware components may further comprise hardware accelerators for computing, e.g., Fourier transforms as needed in embodiments. In particular, hardware components as contemplated herein may include a DSP and/or a FFT hardware accelerator, tightly coupled with any one of the processing devices 118 - 120, allowing high FFT processing performances at very low power.

The device 10 can further include a display controller coupled to a display 11. In exemplary embodiments, the device 10 can further include a network interface or transceiver for coupling to a network.

Computer readable program instructions described herein can be downloaded to processing elements from a computer readable storage medium, via a network, for example, the Internet and/or a wireless network. A network adapter card or network interface in the device may receive the computer readable program instructions from the network and forwards the program instructions for storage in a computer readable storage medium interfaced with the processing elements.

Aspects of the present invention are described herein notably with reference to a flowchart (FIG. 11) and a block diagram (FIG. 12). It will be understood that at least some of the blocks, or combinations of blocks, of the flowchart and arrows or blocks denoting steps in the block diagram can be implemented by computer readable program instructions.

These computer readable program instructions may be provided to one or more processing elements as described above, to produce a machine, such that the instructions, which execute via the one or more processing elements create means for implementing the functions or acts specified in the block or blocks of the flowchart and the block diagram. These computer readable program instructions may also be stored in a computer readable storage medium.

The flowchart and the block diagram in the accompanying drawings illustrate the architecture, functionality, and operation of possible implementations of the hardware component 115 - 120, methods of operating it, and computer program products according to various embodiments of the present invention. Note that each block in the flowchart or the block diagram may represent a module, or a portion of instructions, which comprises executable instructions for implementing the functions or acts specified therein. In variants, the functions or acts mentioned in the blocks may occur out of the order specified in the figures. For example, two blocks shown in succession may actually be executed in parallel, concurrently or still in a reverse order, depending on the functions involved and the algorithm optimization retained. It is also reminded that each block and combinations thereof can be adequately distributed among special purpose hardware components, such as hardware accelerators.

While the present invention has been described with reference to a limited number of embodiments, variants and the accompanying drawings, it will be understood by those skilled in the art that various changes may be made and equivalents may be substituted without departing from the scope of the present invention. In addition, many minor modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims. In addition, many other variants than explicitly touched above can be contemplated. For example, the modules 140, 160 and 170 may actually be implemented as only one module, as two modules, or more generally as more than three modules, depending on the actual implementation chosen.

## Claims

1. A computerized method for deriving step counts from a hardware component (115 - 120) for a consumer good (4, 10) carried or worn by a user, the hardware component comprising an air pressure sensor (116) and a detection module (140), the detection module configured to access data (116D) from the pressure sensor (116), the method comprising, at the detection module (140):
sampling (S20) pressure sensor data from the pressure sensor, the pressure sensor data representative of temporal pressure oscillations;
identifying (S30), from the sampled pressure sensor data, a signal corresponding to pressure oscillations characteristics of pressure waves induced by steps taken by the user (3) of the consumer good (10), while travelling on foot; and
deriving (S38) a step count from the identified signal,
wherein the hardware component further comprises:
a motion sensor (115), the latter configured to produce motion sensor data (115D) representative of a proper acceleration of the hardware component,
and wherein the method further comprises:
accessing (S161) a first step count as derived by said detection module (140) from said pressure sensor data;
accessing (S162) a second step count as derived from said motion sensor data;
comparing (163) the first step count with the second step count accessed to obtain a comparison result; and
based on the obtained comparison result, deactivating (S164) said motion sensor (115).

2. The computerized method of claim **1**, wherein
identifying (S30) comprises identifying a signal corresponding to pressure oscillations, the pressure oscillations having, on average, a peak amplitude of *x* Pascal, where 0.5 ≤ *x* ≤ 20.0, preferably 1.0 ≤ *x* ≤ 10.0, over a period *T,* wherein, on average, 0.2 s ≤ *T* ≤ 0.7 s.

3. The computerized method of claim **1** or **2**, wherein
identifying further comprises transforming (S34) pressure sensor data sampled during a given time interval *w* to a frequency domain representation of the sampled pressure sensor data, whereby said signal is identified (S36) as one or more peaks, preferably as a single peak, in said frequency domain representation.

4. The computerized method of claim **3**, wherein:
identifying said signal comprises attempting to locate (S36), in said frequency domain representation, a peak in a range of frequencies between 1.5 Hz and 4.2 Hz.

5. The computerized method according to any one of claims **1** to **4**, wherein,
at sampling (S20), said pressure sensor data (116D) are sampled (S20) at a sampling rate *r*, where 2.0 Hz ≤ *r ≤* 10.0 Hz, preferably 3.0 Hz ≤ *r ≤* 9.0 Hz, and more preferably *r* = 9 Hz.

6. The computerized method according to any one of claims **1** to **5**, wherein the method further comprises, at the detection module (140), and prior to sampling (S20):
accessing (S42) data as to a context of the user; and
adaptively setting (S12) a sampling rate *r* for the subsequent sampling (S20), according to the accessed data,
and wherein, at sampling,
said pressure sensor data are sampled (S20) at the adaptively set sampling rate *r*.

7. The computerized method according to any one of claims **1** to **6**, wherein,
at sampling, said pressure sensor data are sampled (S20) at a sampling rate *r*, during a time interval *w*, where 5.0 s ≤ *w* ≤ 10.0 s.

8. The computerized method of any one of claims **1** to **7**, wherein
said hardware component is integrated in a mobile device (10),
the method further comprises, prior to sampling (S20) pressure sensor data (116D) from the pressure sensor,
placing the mobile device (10) in a deformable receptacle (4), such as a pocket or a handbag,
and wherein,
identifying (S30) comprises identifying a signal corresponding to pressure oscillations characteristics of pressure waves induced by steps taken by the user, as occurring inside such a deformable receptacle.

9. The computerized method of any one of claims **1** to **8**, wherein the method further comprises:
reactivating (S164) said motion sensor (115) based on the comparison result.

10. The computerized method of claim **1**, wherein the hardware component further comprises
an integrated circuit component (117, 119) carrying the motion sensor (115),
and wherein,
said detection module (140) is at least partly implemented at the integrated circuit component, so as for steps performed by the detection module to be at least partly implemented at the integrated circuit component.

11. The computerized method of any one of claims **1** to **10**, wherein
the hardware component further comprises one or more processors (120) and a sensor hub (118), the latter operatively connected to the one or more processors and configured for processing data from a set of sensors (115, 116) of the hardware component, said set comprising said pressure sensor (116), and so as to off-load processing from the one or more processors (120),
and wherein,
the detection module (140) is at least partly implemented at the sensor hub (118), so as for steps performed by the detection module to be at least partly implemented by the sensor hub.

12. The computerized method of any one of claims **1** to **11**, wherein the method further comprises, at an application and/or a service (180) running on a mobile device (10) in which said hardware component is integrated:
accessing (S181 - S182) the derived (S30) step count or a related quantity.

13. A hardware component for a consumer good (4, 10) comprising an air pressure sensor (116) and a detection module (140), the detection module configured for:
sampling pressure sensor data from the pressure sensor, the pressure sensor data representative of temporal pressure oscillations;
identifying, from the sampled pressure sensor data, a signal corresponding to pressure oscillations characteristics of pressure waves induced by steps taken by a user carrying or wearing the consumer good, while travelling on foot; and
deriving a step count from the identified signal,
wherein the hardware component further comprises:
a motion sensor (115), the latter configured to produce motion sensor data (115D) representative of a proper acceleration of the hardware component,
and wherein the hardware component is further configured for:
accessing (S161) a first step count as derived by said detection module (140) from said pressure sensor data;
accessing (S162) a second step count as derived from said motion sensor data;
comparing (163) the first step count with the second step count accessed to obtain a comparison result; and
based on the obtained comparison result, deactivating (S164) said motion sensor (115).

14. A consumer good (4, 10) comprising the hardware component according to claim **13**,
wherein the pressure sensor (116) is arranged in the hardware component and the latter is configured in the consumer good, so as for a pressure sensitive area of the sensor to be exposed to air (22) in a cavity of the consumer good, wherein the consumer good further comprises an opening, on a given surface of the consumer good, which opening leads to the cavity, and wherein said given surface is a side meant to face a surface, whose distance to the opening fluctuates, in operation, owing to steps taken by a user (3) of the consumer good (10) while travelling on foot.

15. A computer program product for deriving step counts from a hardware component for a consumer good (10), the latter comprising an air pressure sensor (116), a detection module (140) and a motion sensor (115), the detection module configured to access data from the pressure sensor, the motion sensor (115) configured to produce motion sensor data (115D) representative of a proper acceleration of the hardware component, wherein the computer program product comprises a computer readable storage medium having program instructions embodied therewith, the program instructions being executable by one or more processors to cause to implement the steps of the method according to any one of claims **1** to **7**.

## Patentansprüche

1. Ein computergestütztes Verfahren zum Ermitteln von Schrittanzahlen aus einer Hardwarekomponente (115-120) für ein von einem Benutzer mitgeführtes oder getragenes Konsumgut (4, 10), wobei die Hardwarekomponente einen Luftdrucksensor (116) und ein Erfassungsmodul (140) umfasst, wobei das Erfassungsmodul ausgestaltet ist, um auf Daten (116D) vom Drucksensor (116) zuzugreifen, wobei das Verfahren am Erfassungsmodul (140) umfasst:
Abtasten (S20) von Drucksensordaten von dem Drucksensor, wobei die Drucksensordaten zeitliche Druckschwankungen widerspiegeln;
Identifizieren (S30) eines Signals aus den abgetasteten Drucksensordaten, das den Druckschwankungseigenschaften von Druckwellen entspricht, die durch Schritte hervorgerufen werden, die der Benutzer (3) des Konsumguts (10) während einer Bewegung zu Fuß durchführt; und
Ableiten (S38) einer Schrittanzahl aus dem identifizierten Signal,
wobei die Hardwarekomponente weiterhin umfasst:
einen Bewegungssensor (115), wobei letzterer ausgestaltet ist, um Bewegungssensordaten (115D) zu erzeugen, die eine effektive Beschleunigung der Hardwarekomponente widerspiegeln,
und wobei das Verfahren weiterhin umfasst:
Zugreifen (S161) auf eine erste Schrittanzahl, wie sie durch das Erfassungsmodul (140) aus den Drucksensordaten ermittelt wird;
Zugreifen (S162) auf eine zweite Schrittanzahl, wie sie von den Bewegungssensordaten ermittelt wird;
Vergleichen (163) der ersten Schrittanzahl mit der zweiten Schrittanzahl, auf die zugegriffen wird, um ein Vergleichsergebnis zu erhalten; und
basierend auf dem erhaltenen Vergleichsergebnis, Deaktivieren (S164) des Bewegungssensors (115).

2. Das computergestützte Verfahren nach Anspruch 1 wobei
Identifizieren (S30) das Identifizieren eines Signals umfasst, das Druckschwankungen entspricht, wobei die Druckschwankungen im Durchschnitt eine Spitzenamplitude von *x* Pascal aufweisen, wobei 0.5 ≤ *x* ≤ 20.0, vorzugsweise 1.0 ≤ *x* ≤ 10.0, über einen Zeitraum T, wobei im Durchschnitt 0.2 s ≤ *T* ≤ 0.7 s.

3. Das computergestützte Verfahren nach Anspruch 1 oder 2 wobei
Identifizieren weiterhin das Transformieren (S34) von Drucksensordaten umfasst, die während eines gegebenen Zeitintervalls w abgetastet wurden, in eine Frequenzbereichsdarstellung der abgetasteten Drucksensordaten, wodurch das Signal (S36) als eine oder mehrere Spitzen in der Frequenzbereichsdarstellung identifiziert wird, vorzugsweise als eine einzelne Spitze.

4. Das computergestützte Verfahren nach Anspruch 3 wobei:
Identifizieren des Signals den Versuch umfasst, in der Frequenzbereichsdarstellung eine Spitze in einem Frequenzbereich zwischen 1.5 Hz und 4.2 Hz zu lokalisieren (S36).

5. Das computergestützte Verfahren nach einem der Ansprüche 1 bis 4 wobei
beim Abtasten (S20) die Drucksensordaten (116D) mit einer Abtastrate r abgetastet (S20) werden, wobei 2.0 Hz ≤ *r* ≤ 10.0 Hz, vorzugsweise 3.0 Hz ≤ *r* ≤ 9.0 Hz und noch bevorzugter *r* = 9 Hz.

6. Das computergestützte Verfahren nach einem der Ansprüche 1 bis 5 wobei das Verfahren weiterhin umfasst, am Erfassungsmodul (140) und vor dem Abtasten (S20):
Zugreifen (S42) auf Daten in Bezug auf einen Kontext des Benutzers; und
adaptives Einstellen (S12) einer Abtastrate r für das nachfolgende Abtasten (S20) gemäß den zugegriffenen Daten,
und wobei beim Abtasten,
die Drucksensordaten mit der adaptiv eingestellten Abtastrate *r* abgetastet werden (S20).

7. Das computergestützte Verfahren nach einem der Ansprüche 1 bis 6 wobei
beim Abtasten die Drucksensordaten mit einer Abtastrate *r* während eines Zeitintervalls *w* abgetastet werden (S20), wobei 5.0 s ≤ *w* ≤ 10.0 s.

8. Das computergestützte Verfahren nach einem der Ansprüche 1 bis 7 wobei
die Hardwarekomponente in eine mobile Vorrichtung (10) integriert ist, das Verfahren weiterhin vor dem Abtasten (S20) von Drucksensordaten (116D) vom Drucksensor umfasst
Platzieren der mobilen Vorrichtung (10) in einem verformbaren Aufnahmebehälter (4), wie beispielsweise einer Tasche oder einer Handtasche, und wobei
Identifizieren (S30) das Identifizieren eines Signals umfasst, das Druckschwankungseigenschaften von Druckwellen entspricht, die durch Schritte des Benutzers hervorgerufen werden, wie sie in einem solchen verformbaren Aufnahmebehälter auftreten.

9. Das computergestützte Verfahren nach einem der Ansprüche 1 bis 8 wobei das Verfahren weiterhin umfasst:
Reaktivieren (S164) des Bewegungssensors (115) basierend auf dem Vergleichsergebnis.

10. Das computergestützte Verfahren nach Anspruch 1, wobei die Hardwarekomponente weiterhin umfasst
eine integrierte Schaltungskomponente (117, 119), die den Bewegungssensor (115) trägt,
und wobei
das Erfassungsmodul (140) zumindest teilweise an der integrierten Schaltungskomponente implementiert ist, so dass die vom Erfassungsmodul durchgeführten Schritte zumindest teilweise an der integrierten Schaltungskomponente implementiert werden.

11. Das computergestützte Verfahren nach einem der Ansprüche 1 bis 10 wobei
die Hardwarekomponente weiterhin einen oder mehrere Prozessoren (120) und einen Sensor-Hub (118) umfasst, wobei der letztere zusammenwirkend mit dem einen oder den mehreren Prozessoren verbunden und ausgestaltet ist, um Daten von einem Satz von Sensoren (115, 116) der Hardwarekomponente zu verarbeiten, wobei der Satz den Drucksensor (116) umfasst, und um die Verarbeitung von dem einem oder mehreren Prozessoren (120) zu entlasten, und wobei,
das Erfassungsmodul (140) zumindest teilweise am Sensor-Hub (118) implementiert ist, so dass die vom Erfassungsmodul durchgeführten Schritte zumindest teilweise am Sensor-Hub implementiert sind.

12. Das computergestützte Verfahren nach einem der Ansprüche 1 bis 11 wobei das Verfahren weiterhin umfasst, bei einer Anwendung und/oder einem Dienst (180), der auf einer mobilen Vorrichtung (10) läuft, in welche die Hardwarekomponente integriert ist:
Zugreifen (S181-S182) auf die ermittelte (S30) Schrittanzahl oder eine zugehörige Grösse.

13. Eine Hardwarekomponente für ein Konsumgut (4, 10) umfassend einen Luftdrucksensor (116) und ein Erfassungsmodul (140), wobei das Erfassungsmodul ausgestaltet ist für:
Abtasten von Drucksensordaten von dem Drucksensor, wobei die Drucksensordaten zeitliche Druckschwankungen widerspiegeln;
Identifizieren eines Signals aus den abgetasteten Drucksensordaten, das den Druckschwankungseigenschaften von Druckwellen entspricht, die durch Schritte hervorgerufen werden, die ein Benutzer, der das Konsumgut mitführt oder trägt, während einer Bewegung zu Fuß durchführt; und
Ableiten einer Schrittanzahl aus dem identifizierten Signal,
wobei die Hardwarekomponente weiterhin umfasst:
einen Bewegungssensor (115), wobei letzterer ausgestaltet ist, um Bewegungssensordaten (115D) zu erzeugen, die eine effektive Beschleunigung der Hardwarekomponente widerspiegeln,
und wobei die Hardwarekomponente weiterhin ausgestaltet ist für:
Zugreifen (S161) auf eine erste Schrittanzahl, wie sie durch das Erfassungsmodul (140) aus den Drucksensordaten ermittelt wird;
Zugreifen (S162) auf eine zweite Schrittanzahl, wie sie von den Bewegungssensordaten ermittelt wird;
Vergleichen (163) der ersten Schrittanzahl mit der zweiten Schrittanzahl, auf die zugegriffen wird, um ein Vergleichsergebnis zu erhalten; und
basierend auf dem erhaltenen Vergleichsergebnis, Deaktivieren (S 164) des Bewegungssensors (115).

14. Ein Konsumgut (4, 10), umfassend die Hardwarekomponente nach Anspruch 13, wobei der Drucksensor (116) in der Hardwarekomponente angeordnet ist und letztere in dem Konsumgut so ausgestaltet ist, dass ein druckempfindlicher Bereich des Sensors Luft (22) in einem Hohlraum des Konsumgutes ausgesetzt ist, wobei das Konsumgut weiterhin eine Öffnung auf einer vorgegebenen Oberfläche des Konsumgutes umfasst, welche Öffnung zu dem Hohlraum führt, und wobei die vorgegebene Oberfläche eine Seite ist, die dazu bestimmt ist, einer Oberfläche zugewendet zu werden, deren Abstand zur Öffnung im Betrieb schwankt aufgrund von Schritten, die ein Benutzer (3) des Konsumgutes (10) während einer Bewegung zu Fuß durchführt.

15. Ein Computerprogrammprodukt zum Ermitteln von Schrittanzahlen aus einer Hardwarekomponente für ein Konsumgut (10), wobei letzteres einen Luftdrucksensor (116), ein Erfassungsmodul (140) und einen Bewegungssensor (115) umfasst, wobei das Erfassungsmodul ausgestaltet ist, um auf Daten vom Drucksensor zuzugreifen, wobei der Bewegungssensor (115) ausgestaltet ist, um Bewegungssensordaten (115D) zu erzeugen, welche eine effektive Beschleunigung der Hardwarekomponente widerspiegeln, wobei das Computerprogrammprodukt ein computerlesbares Speichermedium mit darin enthaltenen Programmbefehlen umfasst, wobei die Programmbefehle von einem oder mehreren Prozessoren ausführbar sind, um die Schritte des Verfahrens nach einem der Ansprüche 1 bis 7 zu implementieren.

## Revendications

1. Procédé informatisé de calcul de nombres de pas à partir d'un composant matériel (115 - 120) destiné à un bien de consommation (4, 10) porté par un utilisateur, le composant matériel comprenant un capteur de pression d'air (116) et un module de détection (140), le module de détection étant configuré pour accéder à des données (116D) du capteur de pression (116), le procédé comprenant, au niveau du module de détection (140):
échantillonner (S20) des données de capteur de pression provenant du capteur de pression, les données de capteur de pression étant représentatives d'oscillations temporelles de pression;
identifier (S30), à partir des données de capteur de pression échantillonnées, un signal correspondant à des caractéristiques d'oscillations de pression d'ondes de pression induites par des pas effectués par l'utilisateur (3) du bien de consommation (10) lors d'un déplacement à pied; et
obtenir (S38) un nombre de pas à partir du signal identifié,
dans lequel le composant matériel comprend en outre:
un capteur de mouvement (115), ce dernier étant configuré pour produire des données de capteur de mouvement (115D) représentatives d'une accélération propre du composant matériel,
et dans lequel le procédé comprend en outre:
accéder (S161) à un premier nombre de pas tel qu'obtenu par ledit module de détection (140) à partir desdites données de capteur de pression;
accéder (S162) à un deuxième nombre de pas tel qu'obtenu à partir desdites données de capteur de mouvement;
comparer (163) le premier nombre de pas avec le nombre de seconde étape auquel on a accédé pour obtenir un résultat de comparaison; et
sur la base du résultat de comparaison obtenu, désactivation (S 164) dudit capteur de mouvement (115).

2. Procédé informatisé selon la revendication **1**, dans lequel
identifier (S30) comprend identifier un signal correspondant à des oscillations de pression, les oscillations de pression ayant, en moyenne, une amplitude de crête de *x* Pascal, où 0,5 ≤ *x* ≤ 20,0, de préférence 1,0 ≤ *x* ≤ 10,0, sur une période *T,* dans laquelle, en moyenne, 0,2 s ≤ *T* ≤ 0,7 s.

3. Procédé informatisé selon la revendication **1** ou **2**, dans lequel
identifier comprend en outre transformer (S34) des données de capteur de pression échantillonnées pendant un intervalle de temps donné *w* en une représentation dans le domaine fréquentiel des données de capteur de pression échantillonnées, ledit signal étant identifié (S36) comme un ou plusieurs pics, de préférence un seul pic, dans ladite représentation dans le domaine fréquentiel.

4. Procédé informatisé selon la revendication **3**, dans lequel:
identifier ledit signal comprend tenter de localiser (S36), dans ladite représentation dans le domaine fréquentiel, un pic dans une plage de fréquences comprise entre 1,5 Hz et 4,2 Hz.

5. Procédé informatisé selon l'une quelconque des revendications **1** à **4**, dans lequel,
lors de l'échantillonnage (S20), lesdites données de capteur de pression (116D) sont échantillonnées (S20) à un taux d'échantillonnage *r*, où 2,0 Hz ≤ *r* ≤ 10,0 Hz, de préférence 3,0 Hz ≤ *r* ≤ 9,0 Hz et plus préférablement *r* = 9 Hz.

6. Procédé informatisé selon l'une quelconque des revendications **1** à **5**, dans lequel le procédé comprend en outre, au niveau du module de détection (140) et avant l'échantillonnage (S20):
accéder (S42) à des données relatives à un contexte de l'utilisateur; et
établir de manière adaptative (S12) un taux d'échantillonnage *r* pour l'échantillonnage à suivre (S20), en fonction des données accédées,
et dans lequel, lors de l'échantillonnage,
lesdites données de capteur de pression sont échantillonnées (S20) au taux *r* d'échantillonnage établi de manière adaptative.

7. Procédé informatisé selon l'une quelconque des revendications **1** à **6**, dans lequel,
lors de l'échantillonnage, lesdites données de capteur de pression sont échantillonnées (S20) à un taux *r* d'échantillonnage, pendant un intervalle de temps *w,* où 5,0 s ≤ *w* ≤ 10,0 s.

8. Procédé informatisé selon l'une quelconque des revendications **1** à **7**, dans lequel
ledit composant matériel est intégré dans un dispositif mobile (10),
le procédé comprend en outre, avant l'échantillonnage (S20) de données de capteur de pression (116D) provenant du capteur de pression,
placer le dispositif mobile (10) dans un réceptacle déformable (4), tel qu'une poche ou un sac à main,
et dans lequel
identifier (S30) comprend identifier un signal correspondant à des caractéristiques d'oscillations de pression d'ondes de pression induites par des pas effectuées par l'utilisateur, comme se produisant à l'intérieur d'un tel réceptacle déformable.

9. Procédé informatisé selon l'une quelconque des revendications **1** à **8**, dans lequel le procédé comprend en outre:
réactiver (S164) ledit capteur de mouvement (115) sur la base du résultat de la comparaison.

10. Procédé informatisé selon la revendication **1**, dans lequel le composant matériel comprend en outre
un composant de circuit intégré (117, 119) portant le capteur de mouvement (115),
et dans lequel
ledit module de détection (140) est au moins partiellement implémenté au niveau du composant de circuit intégré, de sorte que les étapes effectuées par le module de détection soient au moins partiellement implémentées au niveau du composant de circuit intégré.

11. Procédé informatisé selon l'une quelconque des revendications **1** à **10**, dans lequel
le composant matériel comprend en outre un ou plusieurs processeurs (120) et un concentrateur de capteurs (118), ce dernier étant connecté de manière fonctionnelle audit un ou plusieurs processeurs et configuré pour traiter des données provenant d'un ensemble de capteurs (115, 116) du composant matériel, ledit ensemble comprenant ledit capteur de pression (116), et de manière à décharger en traitement ledit un ou plusieurs processeurs (120),
et dans lequel
le module de détection (140) est au moins partiellement implémenté au niveau du concentrateur de capteurs (118), de sorte que les étapes effectuées par le module de détection soient au moins partiellement implémentées par le concentrateur de capteurs.

12. Procédé informatisé selon l'une quelconque des revendications **1** à **11**, dans lequel le procédé comprend en outre, au niveau d'une application et / ou d'un service (180) s'exécutant sur un dispositif mobile (10) dans lequel ledit composant matériel est intégré:
accéder (S181 - S182) au nombre de pas obtenu (S30) ou à une quantité associée.

13. Composant matériel pour un bien de consommation (4, 10) comprenant un capteur de pression d'air (116) et un module de détection (140), le module de détection étant configuré pour:
échantillonner des données de capteur de pression provenant du capteur de pression, les données de capteur de pression représentant des oscillations temporelles de pression;
identifier, à partir des données de capteur de pression échantillonnées, un signal correspondant aux caractéristiques d'oscillation de pression d'ondes de pression induites par des pas effectués par un utilisateur portant le bien de consommation lors de son déplacement à pied; et
obtenir un nombre de pas à partir du signal identifié,
dans lequel le composant matériel comprend en outre:
un capteur de mouvement (115), ce dernier étant configuré pour produire des données de capteur de mouvement (115D) représentatives d'une accélération propre du composant matériel,
et dans lequel le composant matériel est en outre configuré pour:
accéder (S161) à un premier nombre de pas tel qu'obtenu par ledit module de détection (140) à partir desdites données de capteur de pression;
accéder (S 162) à un deuxième nombre de pas tel qu'obtenu à partir desdites données de capteur de mouvement;
comparer (163) le premier nombre de pas avec le deuxième nombre de pas accédés pour obtenir un résultat de comparaison; et
sur la base du résultat de comparaison obtenu, désactiver (S164) ledit capteur de mouvement (115).

14. Produit de consommation (4, 10) comprenant le composant matériel selon la revendication **13**,
dans lequel le capteur de pression (1 16) est agencé dans le composant matériel et ce dernier est configuré dans le bien de consommation, de sorte qu'une zone sensible à la pression du capteur soit exposée à l'air (22) dans une cavité du bien de consommation, dans lequel le bien de consommation comporte en outre une ouverture, sur une surface donnée du bien de consommation, laquelle ouverture mène à la cavité, et dans lequel ladite surface donnée est un côté destiné à faire face à une surface dont la distance à l'ouverture fluctue, en fonctionnement, en raison de pas effectués par un utilisateur (3) du bien de consommation (10) lors de son déplacement à pied.

15. Produit programme d'ordinateur permettant d'obtenir des nombres de pas à partir d'un composant matériel pour un bien de consommation (10), ce dernier comprenant un capteur de pression d'air (116), un module de détection (140) et un capteur de mouvement (115), le module de détection configuré pour accéder à des données du capteur de pression, le capteur de mouvement (115) configuré pour produire des données de capteur de mouvement (115D) représentatives d'une accélération propre du composant matériel, le produit de programme d'ordinateur comprenant un support de stockage lisible par ordinateur ayant des instructions de programme incorporées à celui-ci, les instructions de programme pouvant être exécutées par un ou plusieurs processeurs pour amener à mettre en oeuvre les étapes du procédé selon l'une quelconque des revendications **1** à **7**.
